(19) Europäisches Patentamt
European Patent Office
Office européen des brevets

(11) **EP 2 339 485 A1**

(12) **DEMANDE DE BREVET EUROPEEN**

(43) Date de publication:
**29.06.2011 Bulletin 2011/26**

(51) Int Cl.:
***G06F 17/50*** *(2006.01)*

(21) Numéro de dépôt: **10290610.4**

(22) Date de dépôt: **12.11.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.11.2009 FR 0905681**

(71) Demandeur: **IFP Energies nouvelles**
**92852 Rueil-Malmaison Cedex (FR)**

(72) Inventeurs:
• **Da Veiga, Sébastien**
**75005 Paris (FR)**
• **Le Ravalec, Mickaele**
**92500 Rueil Malmaison (FR)**

(54) **Méthode d'exploitation d'un gisement pétrolier par reconstruction de modèle de réservoir**

(57) - Méthode d'exploitation d'un gisement pétrolier selon un schéma d'exploitation donné, à partir d'une carte de faciès représentative du gisement.
- On réalise de nouvelles mesures au sein du gisement permettant de mieux le caractériser. On choisit un simulateur géostatistique. Puis, on identifie un jeu de nombres aléatoires qui, donné à ce simulateur géostatistique, fournit une représentation en faciès identique à la carte initiale, en inversant l'algorithme de génération de nombre aléatoire de ce simulateur géostatistique. On modifie alors la carte pour prendre en compte les nouvelles mesures, en réalisant une simulation géostatistique contrainte par ces mesures, au moyen du simulateur géostatistique et du jeu de nombres aléatoires. Enfin, on modifie le schéma d'exploitation du gisement en tenant compte de la carte ainsi modifiée, et on exploite le gisement en mettant en oeuvre le schéma d'exploitation modifié.
- Application notamment à l'exploitation de gisements pétroliers.

Fig. 2

**Description**

La présente invention concerne le domaine technique de l'industrie pétrolière, et plus particulièrement la caractérisation des réservoirs pétroliers par construction d'une représentation du réservoir, appelée modèle de réservoir.

En particulier, l'invention concerne une méthode pour mettre à jour un modèle de réservoir après acquisition de nouvelles mesures au sein du réservoir pétrolier.

L'optimisation et l'exploitation des gisements pétroliers reposent sur une description aussi précise que possible de la structure, des propriétés pétrophysiques, des propriétés fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique.

Ces modèles bien connus et largement utilisés dans l'industrie pétrolière, permettent de déterminer de nombreux paramètres techniques relatifs à la recherche, l'étude ou l'exploitation d'un réservoir, d'hydrocarbures par exemple. En effet, un modèle de réservoir est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes, même si de nouvelles méthodes sont régulièrement développées. Il est donc crucial, dans le domaine pétrolier, de construire un modèle de réservoir aussi précis que possible. Pour ce faire, l'intégration de toutes les données disponibles est indispensable.

Un modèle de réservoir a donc pour vocation de rendre compte, au mieux, de toutes les informations d'un gisement. Un modèle de réservoir est représentatif lorsqu'une simulation de réservoir fournit des estimations de données d'historique très proches des données observées. On appelle données d'historique, les données de production issues de mesures aux puits en réponse à la production du réservoir (production d'huile, production d'eau d'un ou plusieurs puits, ratio gaz/huile (GOR), proportion d'eau de production ("water cut")), et/ou les données de sismiques répétitives (impédances sismiques 4D dans une ou plusieurs régions, etc.). Une simulation de réservoir est une technique permettant de simuler les écoulements de fluides au sein d'un réservoir au moyen d'un logiciel appelé simulateur d'écoulement.

Le calage d'historique ("history matching") consiste à modifier les paramètres d'un modèle de réservoir, tels que les perméabilités, les porosités ou les skins de puits (représentant les endommagements autour du puits), les connections de failles..., pour minimiser les écarts entre les données d'historique simulées et mesurées. Les paramètres peuvent être liés à des régions géographiques comme les perméabilités ou porosités autour d'un puits ou plusieurs puits.

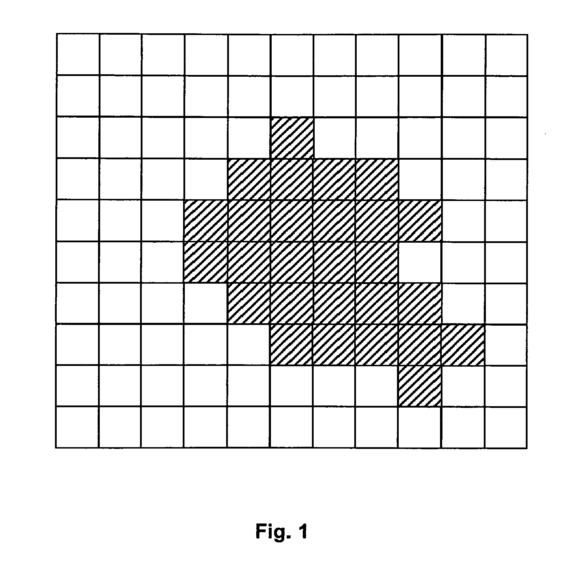

Un modèle de réservoir consiste en une grille à N dimensions (N>0 et en général égale deux ou trois) dont chacune des mailles se voit affecter la valeur d'une propriété caractéristique de la zone étudiée. Il peut s'agir par exemple de la porosité ou de la perméabilité distribuée dans un réservoir. La figure 1 représente une carte de faciès d'un réservoir pétrolier, constituant un modèle de réservoir en deux dimensions. Le quadrillage représente les mailles. Les mailles grises représentent une zone à faciès réservoir, les mailles blanches représentent une zone à faciès non réservoir.

La valeur d'une propriété caractéristique de la zone étudiée est appelée variable régionalisée. Il s'agit d'une variable continue, distribuée dans l'espace, et représentative d'un phénomène physique. Du point de vue mathématique, il s'agit simplement d'une fonction $z(u)$ prenant une valeur en chaque point $u$ (la maille de la grille) d'un domaine d'étude D (la grille représentative du réservoir). Mais la variation de la variable régionalisée dans cet espace est trop irrégulière pour pouvoir être formalisée par une équation mathématique. En fait, la variable régionalisée représentée par $z(u)$ possède à la fois un aspect global, relatif à la structure spatiale du phénomène étudié, et un aspect local aléatoire.

Ce dernier aspect, local aléatoire, peut être modélisé par une variable aléatoire (VA). Une variable aléatoire est une variable qui peut prendre un certain nombre de réalisations $z$ suivant une certaine loi de probabilité. Des variables continues telles que des attributs sismiques (impédance acoustique) ou des propriétés pétrophysiques (saturation, porosité, perméabilité) peuvent être modélisées par des VA. De ce fait, au point $u$, la variable régionalisée $z(u)$ peut être considérée comme la réalisation d'une variable aléatoire Z.

Cependant, pour représenter correctement la variabilité spatiale de la variable régionalisée, il faut pouvoir prendre en compte le double aspect, à la fois aléatoire et structuré. Une des approches possibles, de type probabiliste, fait appel à la notion de fonction aléatoire. Une fonction aléatoire (FA) est un ensemble de variables aléatoires (VA) définies sur un domaine d'étude D (la grille représentative du réservoir), c'est-à-dire $\{Z(u), u* D\}$, également noté $Z(u)$. Ainsi tout groupe de valeurs échantillonnées $\{z(u1),...,z(un)\}$ peut être considéré comme une réalisation particulière de la fonction aléatoire $Z(u) = \{Z(u1),...,Z(un)\}$. La FA $Z(u)$ permet de prendre en compte à la fois l'aspect localement aléatoire (en $u*$, la variable régionalisée $z(u*)$ étant une VA) et l'aspect structuré (via la loi de probabilité spatiale associée à la FA $Z(u)$).

Les réalisations d'une fonction aléatoire fournissent des modèles stochastiques de réservoir. A partir de tels modèles, il est possible d'apprécier le mode de fonctionnement de la zone souterraine étudiée. Par exemple, la simulation des écoulements dans un milieu poreux représenté par des modèles stochastiques numériques, permet entre autre, de prédire la production du réservoir et ainsi d'optimiser son exploitation en testant différents scenarii.

La construction d'un modèle stochastique de réservoir peut être décrite de la façon suivante :

- Tout d'abord, on mesure sur le terrain d'une part, des données statiques (diagraphies, mesures sur des échantillons prélevés dans les puits, sismique...) et d'autre part, des données dynamiques (données de production, essais de puits, temps de percée...) dont la particularité est de varier au cours du temps en fonction des écoulements de fluide dans le réservoir.

- Puis, à partir des données statiques, on définit une fonction aléatoire, caractérisée par sa fonction de covariance (ou de façon analogue par son variogramme), sa variance et sa moyenne.

- Par ailleurs on définit un ensemble de nombres aléatoires tirés indépendamment les uns des autres : il peut s'agir, par exemple, d'un bruit blanc Gaussien ou de nombres uniformes. Il existe donc un nombre aléatoire indépendant par maille et par réalisation.

- Enfin, à partir d'un simulateur géostatistique choisi et du jeu de nombres aléatoires, un tirage aléatoire dans la fonction aléatoire est effectué, donnant accès à une réalisation (continue ou discrète) représentant une image possible du réservoir. Classiquement, le tirage aléatoire est fait dans un cadre hiérarchique. En premier lieu, le réservoir est peuplé aléatoirement par une réalisation de la fonction aléatoire associée aux faciès, conditionnellement aux mesures de faciès effectuées ponctuellement. Puis, la porosité est générée aléatoirement sur chacun des faciès, conditionnellement aux données de porosité obtenues sur le faciès considéré. Ensuite, on simule la perméabilité horizontale selon sa fonction aléatoire associée, conditionnellement aux faciès et aux porosités tirées précédemment, ainsi qu'aux mesures de perméabilité effectuées sur le terrain. Enfin, on peuple le réservoir par une réalisation aléatoire de la perméabilité verticale conditionnellement à toutes les simulations précédentes et aux données de perméabilité obtenues ponctuellement.

- A ce stade, les données dynamiques n'ont pas été considérées. Elles sont intégrées dans les modèles de réservoir par le biais d'une optimisation ou d'un calage. On définit une fonction objectif mesurant l'écart entre les données dynamiques mesurées sur le terrain et les réponses correspondantes simulées pour le modèle considéré. Le but du processus d'optimisation est de modifier petit à petit ce modèle pour réduire la fonction objectif. Des techniques de paramétrage permettent de faire ces modifications tout en préservant la cohérence vis-à-vis des données statiques.

Au final, les modèles modifiés sont cohérents vis-à-vis des données statiques et vis-à-vis des données dynamiques. Ces modèles doivent pouvoir être mis à jour complètement : quand de nouvelles données sont disponibles, le modèle doit être modifié pour honorer également ces nouvelles données. Par ailleurs, les techniques de calage et de paramétrage s'améliorent continuellement. Par conséquent, l'ingénieur réservoir a fréquemment besoin de revenir sur des modèles de réservoir élaborés et calés dans le passé. L'objectif est d'affiner ces modèles et de les mettre à jour au regard des données acquises depuis l'époque où le modèle avait été initialement élaboré.

Cependant, une difficulté essentielle demeure pour revenir sur des modèles numériques élaborés dans le passé. En effet, pour appliquer une méthode permettant d'affiner le calage d'une réalisation existante, il faut connaître le jeu de nombres aléatoires qui, lorsqu'il est donné au simulateur géostatistique, fournit le modèle numérique (la réalisation) en question. Or, en règle générale, cette information n'existe plus. De même, le modèle de variogramme (ou covariance), caractérisant la variabilité spatiale dans la zone souterraine de l'attribut représenté et nécessaire pour caractériser la fonction aléatoire, n'est plus connu. Ce dernier point est moins important, car l'étude du modèle numérique existant peut permettre de retrouver ce variogramme.

Par le document FR 2869421, on connaît une méthode permettant de reconstruire des modèles stochastiques numériques, c'est-à-dire, pour une fonction aléatoire déterminée au préalable, d'identifier un jeu de nombres aléatoires qui, donné en entrée à un simulateur géostatistique, conduit à une réalisation semblable au modèle numérique considéré. Cependant, cette technique s'applique à des variables continues représentatives par exemple de la porosité, c'est-à-dire au cas d'un réservoir comportant un unique faciès.

L'invention concerne une méthode alternative pour exploiter des gisements pétroliers, dans laquelle on réalise des mesures, on met à jour une carte représentative des propriétés du gisement pour prendre en compte ces mesures, et l'on modifie le schéma d'exploitation du gisement en fonction de la carte mise à jour. La méthode se base sur une identification d'un jeu de nombres aléatoires utilisés pour générer la carte en faciès initiale, qui donné en entrée à un simulateur géostatistique, conduit à une réalisation en faciès semblable à celle de la carte initiale.

**La méthode selon l'invention**

L'objet de l'invention est une méthode d'exploitation d'un gisement pétrolier selon un schéma d'exploitation donné, à partir d'une carte de faciès représentative du gisement, méthode dans laquelle on réalise des mesures permettant de mieux caractériser ledit gisement. La méthode comporte les étapes suivantes :

- on choisit un simulateur géostatistique comprenant un algorithme de génération de nombre aléatoire ;

- on identifie un jeu de nombres aléatoires qui, donné audit simulateur géostatistique, fournit une représentation en faciès identique à ladite carte, en inversant ledit algorithme de génération de nombre aléatoire ;

- on modifie ladite carte pour prendre en compte lesdites mesures, en réalisant une simulation géostatistique contrainte par lesdites mesures, au moyen dudit simulateur géostatistique et dudit jeu de nombres aléatoires;

- on adapte ledit schéma d'exploitation du gisement en tenant compte de ladite carte modifiée ; et

- on exploite ledit gisement en mettant en oeuvre ledit schéma d'exploitation modifié.

Les mesures peuvent être choisies parmi les données suivantes: des données diagraphiques, des données issues d'analyse de carottes, des données de production.

Le simulateur géostatistique peut être choisi parmi les simulateurs suivants : simulateur utilisant la méthode de simulation séquentielle d'indicatrices, simulateur utilisant la méthode des Gaussiennes tronquées, simulateur utilisant la méthode des pluri-Gaussiennes.

Selon un premier mode de réalisation, le simulateur géostatistique est un simulateur utilisant la méthode de simulation séquentielle d'indicatrices, la carte est une grille dont chaque maille possède une valeur $V$ de faciès, $V = (V_1,...,v_n)$, on identifie le jeu de nombres aléatoires, $p_1,...,p_n$ ,en réalisant les étapes suivantes:

i. on transforme lesdites mesures, $v_a$, en un vecteur d'indicatrices;

ii. on construit un chemin aléatoire visitant toutes les mailles de ladite grille,

iii. en chaque maille $i$ dudit chemin :

(a) on estime une probabilité d'occurrence de chaque faciès par une technique de krigeage d'indicatrices utilisant comme données conditionnelles ledit vecteur d'indicatrices auquel on ajoute des faciès simulés précédemment, $V_{<i} = (V_1 ,..., V_{i-1})$;

(b) on normalise ladite probabilité d'occurrence;

(c) on construit une fonction de répartition empirique $F_{Vi|v\alpha V<i}$ associée à la probabilité d'occurrence ;

(d) on génère un nombre aléatoire $p_i$ selon une loi uniforme sur l'intervalle $\llbracket F_{Vi|vaV<i} (V_i$ - 1$), F_{Vi\setminus vaV<i}(V_i) \rrbracket$.

Selon un second mode de réalisation, le simulateur géostatistique est un simulateur utilisant la méthode des Gaussiennes tronquées, la carte est une grille dont chaque maille possède une valeur V de faciès, $V = (V_1,..., V_n)$, on identifie le jeu de nombres aléatoires, en réalisant les étapes suivantes:

- on génère une réalisation Y d'un champ Gaussien stationnaire de corrélogramme donné $p(h)$ qui, lorsqu'on tronque ladite réalisation Y avec des seuils donnés, produit une représentation en faciès identique à ladite carte ; et

- on identifie ledit jeu de nombres aléatoires, en déterminant un jeu de nombres aléatoires permettant de reconstruire par simulation stochastique la réalisation Y au moyen d'une technique d'identification de nombre aléatoire applicable à des données continues.

Selon ce second mode de réalisation, on peut générer la réalisation Y en appliquant l'approche séquentielle suivante :

i. on construit un chemin aléatoire visitant toutes les mailles de la grille

ii. en chaque maille $i$,

(a) on calcule une densité de probabilité $g_i(y_i|C_{<i}, Y_{<i}$ de $Y_i$ sachant des contraintes $C_{<i} = \{a_{Vji-1} \leq Y_j < a_{Vj}, j = 1,..., i\}$ et des valeurs $Y_{<i} = (Y_1,..., Y_{i-1})$ simulées sur des mailles précédemment visitées par la formule suivante :

$$g_i\left(y_i\big|C_{<i}, Y_{<i}\right) = \frac{\dfrac{1}{\hat{\sigma}_i} \rho\left(\dfrac{y_i - \hat{\mu}_i}{\hat{\sigma}_i}\right)}{\Phi\left(\dfrac{a_{V_{ii}-1} - \hat{\mu}_i}{\hat{\sigma}_i}\right) - \Phi\left(\dfrac{a_{V_{ii}} - \hat{\mu}_i}{\hat{\sigma}_i}\right)} 1\left\{a_{V_j-1} \leq Y_j < a_{V_j}, j = 1,..., i\right\}$$

avec : $\hat{\mu}_i$, et $\hat{\sigma}_i$ moyenne et écart-type de krigeage simple de $Y_i$ sachant $Y_{<i}$.
(b) on génère une réalisation selon ladite densité de probabilité.

Selon un troisième mode de réalisation, le simulateur géostatistique est un simulateur utilisant la méthode des pluri-Gaussiennes, la carte est une grille dont chaque maille possède une valeur V de faciès, $V = (V_1,..., V_n)$, on identifie le jeu de nombres aléatoires, en réalisant les étapes suivantes:

- on génère deux réalisations $Y^1$ et $Y^2$ de champs Gaussiens stationnaires standards de corrélogrammes connus $\rho_1$ ($h$) et $\rho_2(h)$ qui, lorsqu'on combine lesdites réalisations $Y^1$ et $Y^2$ à un masque de seuillage donné, produisent une représentation en faciès identique à ladite carte ; et
- on identifie ledit jeu de nombres aléatoires, en déterminant deux jeux de nombres aléatoires permettant de reconstruire par simulation stochastique lesdites réalisations $Y^1$ et $Y^2$ au moyen d'une technique d'identification de nombre aléatoire applicable à des données continues, ledit jeu de nombres aléatoires étant constitué desdits deux jeux de nombre aléatoire.

Selon ce troisième mode de réalisation, on peut générer les réalisations $Y^1$ et $Y^2$ en appliquant l'approche séquentielle suivante :

i. on construit un chemin aléatoire visitant toutes les mailles de la grille ;
ii. en chaque maille $i$

(a) on calcule une densité de probabilité $g(y_i^1, y_i^2 \big| C_{<i}, Y_{<i}^1, Y_{<i}^2)$ de $(Y_i^1, Y_i^2)$ sachant des contraintes

$C_{<i} = \left\{(Y_j^1, Y_j^2) \in \mathcal{E}_{V_j}, j = 1,..., i\right\}$ et des valeurs $(Y_{<i}^1, Y_{<i}^2)$ simulées sur des mailles précédemment visitées par la formule suivante :

$$g(y_i^1, y_i^2 \big| C_{<i}, Y_{<i}^1, Y_{<i}^2) = \sum_{j=1}^{n_{V_i}} \varepsilon_j g_j^1(y_i^1) g_j^2(y_i^2)$$

avec :

$$g_j^1\left(y_i^1\right)=\dfrac{\dfrac{1}{\hat{\sigma}_i^{(1)}}\,\rho\left(\dfrac{y_i^1-\hat{\mu}_i^{(1)}}{\hat{\sigma}_i^{(1)}}\right)}{\Phi\left(\dfrac{b_{j,V_i}-\hat{\mu}_i^{(1)}}{\hat{\sigma}_i^{(1)}}\right)-\Phi\left(\dfrac{a_{j,V_i}-\hat{\mu}_i^{(1)}}{\hat{\sigma}_i^{(1)}}\right)}$$

$$g_j^2\left(y_i^2\right)=\dfrac{\dfrac{1}{\hat{\sigma}_i^{(2)}}\,\rho\left(\dfrac{y_i^2-\hat{\mu}_i^{(2)}}{\hat{\sigma}_i^{(2)}}\right)}{\Phi\left(\dfrac{d_{j,V_i}-\hat{\mu}_i^{(2)}}{\hat{\sigma}_i^{(2)}}\right)-\Phi\left(\dfrac{c_{j,V_i}-\hat{\mu}_i^{(2)}}{\hat{\sigma}_i^{(2)}}\right)}$$

où $\varepsilon_j = |\varepsilon_{j,Vi}|/|\varepsilon_{Vi}|$ et et sont la moyenne et l'écart-type de krigeage simple de $Y_i^x$ sachant $Y_{<i}^x$, et $x$=1 ou $x$=2 ;

(b) on génère une réalisation selon ladite densité de probabilité.

Enfin, selon l'invention, on peut modifier la carte en appliquant une méthode de déformation graduelle.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- La figure 1 représente une carte de faciès d'un réservoir pétrolier.
- La figure 2 illustre les étapes de la méthode selon l'invention.
- La figure 3 illustre l'adaptation nécessaire du schéma d'exploitation suite à la modification de la carte de faciès prenant en compte de nouvelles mesures.

**Description détaillée de la méthode**

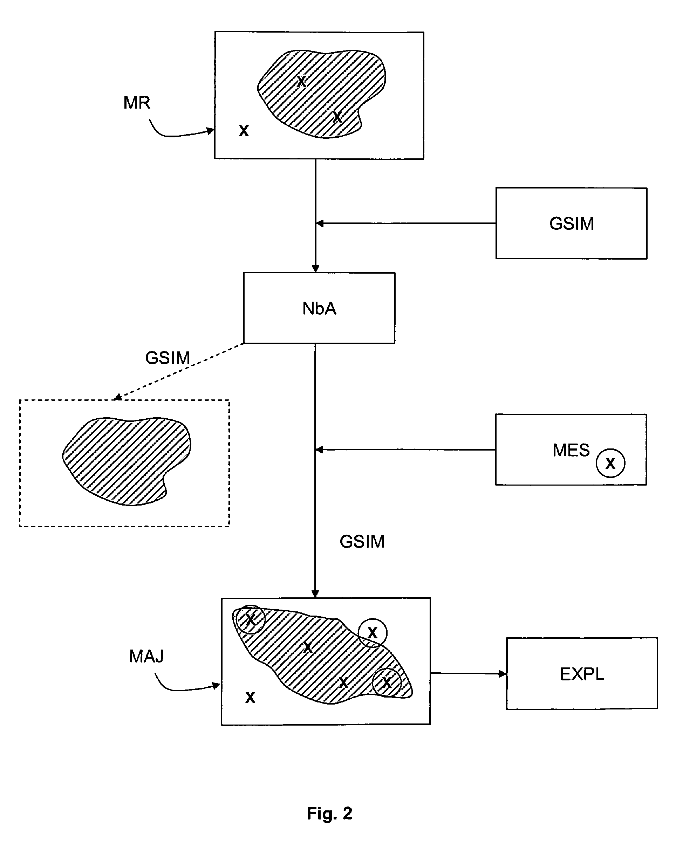

La méthode selon l'invention permet d'exploiter un gisement pétrolier, pour lequel on possède une carte (MR) représentative des faciès du gisement. Cette carte peut comprendre plusieurs faciès : des faciès lithologiques tels que lithologies calcaire, grès, argile, etc., ou des faciès sismiques, bien connus des spécialistes. La figure 2 illustre les étapes de la méthode selon l'invention. Elle comporte les étapes suivantes:

1. On réalise des mesures au sein du gisement (MES) ;

2. On choisit un simulateur géostatistique (GSIM) ;

3. On identifie un jeu de nombres aléatoires qui, donné au simulateur géostatistique choisi, fourni une représentation en faciès semblable à celle de la carte initiale (NbA) ;

4. On met à jour la carte pour prendre en compte les mesures (MAJ) ; et

5. On modifie le schéma d'exploitation du gisement et on exploite le gisement avec ce schéma mis à jour (EXPL).

1. Réalisation de mesures au sein du gisement

Lors de l'exploitation d'un gisement, on réalise de nouvelles mesures permettant de mieux caractériser le gisement, et donc d'optimiser l'exploitation. Par exemple :

- des données statiques : mesures sur des échantillons prélevés dans les puits (tels que des carottes), sismique, et/ou diagraphies, permettant de connaître la porosité ou la perméabilité par exemple, tout le long du puits dans lequel sont réalisées les diagraphies.

- des données dynamiques : données de production, essais de puits, temps de percée... dont la particularité est de varier au cours du temps en fonction des écoulements de fluide dans le réservoir. Les données de production permettent de réaliser un calage d'historique. Tant que le réservoir est exploité, de nouvelles données de production sont collectées qui varient avec le temps. Il s'agit par exemple des pressions dans les puits ou des débits en huile, eau ou gaz...

2. Choix d'un simulateur géostatistique

La deuxième étape de la méthode selon l'invention consiste à choisir un simulateur géostatistique. Les méthodes de simulation géostatistique produisent des réalisations de fonction aléatoire à partir d'un jeu de nombres aléatoires, par exemple un bruit blanc Gaussien ou des nombres uniformes indépendants. Ils existent de nombreux simulateurs géostatiques pour générer une carte en faciès. Dans le cadre d'une statistique à deux points, on utilise de préférence les méthodes suivantes :

- la simulation séquentielle d'indicatrices décrite dans : Goovaerts, P., Geostatistics for Natural Resources Evaluation, Oxford University Press, New York (1997)

- la méthode des Gaussiennes tronquées, décrite dans : Galli, A., Beucher, H., Le Loc'h, G. and Doligez, B. (1994), The pros and the cons of the truncated gaussian method, Geostatistical Simulations, 217-233.

- la méthode des pluri-Gaussiennes, décrite dans : Le Loc'h, G. and Galli, A. (1996), Truncated plurigaussian method: theoretical and practical point of view, Geostatistics Wollongong'96 1, E.Y. Baafi and N.A. Schofields eds, Kluwe, 211-222.

Toutes ces procédures impliquent la génération de nombres aléatoires qui, après avoir été transformés selon une technique propre à chacune d'entre elles, permettent de générer la carte en faciès.

On rappelle la procédure de simulation d'une carte en faciès $V = (V_1,...,V_n)$ conditionnellement à des observations $\{v_\alpha, \alpha=1,...,n_\alpha\}$, pour chacune de ces trois simulateurs géostatistiques: Pour toutes ces techniques, les notations communes sont les suivantes :

- $D = \{(x_i, y_i, z_i), i = 1,...,n\}$ est le sous-domaine de $R^3$ discrétisé correspondant au centre des mailles de la grille réservoir

- K est le nombre de faciès différents présents dans le réservoir

- Pour $\alpha = 1,...,n_\alpha$, $v_\alpha \in \{1,...,K\}$ désigne le faciès observé au point $(x_\alpha, y_\alpha, z_\alpha)$

- Pour $i=1,...,n$, $V_i \in \{1,...,K\}$ désigne le faciès simulé au point $(x_i, y_i, z_i)$

- $\varphi(x) = \dfrac{1}{\sqrt{2\pi}} e^{-\frac{x^2}{2}}$ est la densité de probabilité de la loi Gaussienne standard

- $\Phi(x) = \int_{-\infty} \varphi(t)dt$ est la fonction de répartition de la loi Gaussienne standard

Simulation séquentielle d'indicatrices (SISim)

La procédure de simulation est la suivante.

i. On transforme les observations (mesures) $v_\alpha$ en un vecteur de K indicatrices, défini par:

$$i_{\alpha,k} = \begin{cases} 1 & \text{si } v_\alpha = k \\ 0 & \text{sinon} \end{cases} \text{ pour } k=1,...,K.$$

ii. On construit un chemin aléatoire visitant toutes les mailles de la grille réservoir, sauf celles pour lesquelles on a une observation (mesure ou maille déjà simulée) $v_\alpha$

iii. En chaque maille $i$ du chemin:

(a) On estime la probabilité d'occurrence de chaque faciès $k$ par une technique de krigeage d'indicatrices. Les données conditionnelles sont les valeurs des indicatrices définies en (1) auxquelles on rajoute $V_{<i} = (V_1,...,V_{i-1})$, les faciès simulés précédemment

(b) On corrige ces probabilités estimées

(c) On construit la fonction de répartition empirique $F_{V_i|v\alpha V<i}$ (t) associée à ces probabilités

(d) On génère un nombre aléatoire $p_i$ selon la loi uniforme sur l'intervalle [0,1]

(e) Le faciès simulé au point i est celui qui correspond à l'intervalle auquel p appartient :

$$V_i = k^* \text{ si } F_{V_i|v_a V_{<i}}(k^* - 1) < p \leq F_{V_i|v_a V_{<i}}(k^*)$$

(f) On passe à la maille suivante sur le chemin et on répète les étapes (a) à (d)

Simulation par la méthode des Gaussiennes tronquées

La simulation d'une carte en faciès par la méthode de la Gaussienne tronquée consiste à générer des faciès en tronquant une réalisation $Y(x, y, z)$ d'un champ Gaussien stationnaire de moyenne nulle, de variance unité et de corrélogramme p(h)où $h$ est la distance euclidienne entre deux points. La réalisation $Y(x, y, z)$ peut être obtenue par simulation séquentielle Gaussienne comme décrit dans l'ouvrage suivant : Goovaerts, P., Geostatistics for Natural Resources Evaluation, Oxford University Press, New York (1997); ou par l'algorithme FFT-MA introduit dans l'article suivant : Le Ravalec M., Noetinger B. and Hu L.Y., The FFT moving average (FFT-MA) generator: an efficient numerical method for generating and conditioning Gaussian simulations, Math. Geol., 32(6) (2000).

De manière générique la carte en faciès est donnée par la relation suivante. En chaque maille $i$ de la grille, on définit :

$$V(x_i, y_i, z_i) = \sum_{k=1}^{K} k 1\{a_{k-1} \leq Y(x_i, y_i, z_i) < a_k\}$$

où $-\infty = a_0 < a_1 < ... < a_{k-1} < a_k < ... < a_k = +\infty$ sont les seuils de troncature. Leur valeur est déterminée à partir des proportions de chaque faciès. Ces proportions peuvent varier selon les mailles (cas non-stationnaire) ou être constantes sur toute la grille (cas stationnaire). En notant $\pi_k$ la proportion du faciès $k$ pour $k = 1,...,K$, la relation entre les seuils et les proportions est la suivante :

$$a_k(x, y, z) = \Phi^{-1}\Big(\sum_{j=1}^{k} \pi_j(x, y, z)\Big)$$

pour $k = 1,..., K$ . $\Phi^{-1}$ désigne l'inverse de la fonction de répartition de la loi normale standard. La procédure de simulation est la suivante :

    i. A partir des proportions de faciès, on calcule les seuils

    ii. On génère une réalisation $Y$ d'un champ Gaussien selon une des deux méthodes mentionnées précédemment

    iii. On identifie le faciès à attribuer à une maille selon l'intervalle auquel appartient la valeur de Y générée dans cette maille

Si des observations de faciès $\{v_\alpha, \alpha = 1,...,n_\alpha\}$ sont disponibles, la réalisation $Y(x,y,z)$ est remplacée par sa version conditionnelle $Y(x,y,z)|\{\alpha_{v\alpha}-1 \le Y_\alpha < a_{v\alpha}, \alpha =1,..., n_\alpha\}$ qui peut être générée selon la méthode décrite dans l'article suivant :

Freulon, X., and de Fouquet, C., Conditioning a Gaussian model with inequalities, in Geostatistics Troia'92, A. Soares, ed., Kluwer Academic Publishers, Dordrecht, The Netherlands, 201-212 (1993).

Simulation par la méthode des pluri-Gaussiennes

L'approche pluri-Gaussienne est une extension de la méthode des Gaussiennes tronquées dans le sens où elle consiste à tronquer plusieurs champs Gaussiens. Cette procédure a été introduite pour ajouter de la flexibilité dans la modélisation des transitions entre faciès : elle permet de modéliser une grande variété d'environnements géologiques. La méthode proposée est décrite ici dans le cas le plus simple de génération pluri-Gaussienne : seuls deux champs Gaussiens indépendants sont considérés. L'extension de la méthode au cas de plusieurs champs Gaussiens qui peuvent être corrélés est directe.

On considère donc deux champs Gaussiens stationnaires standards indépendants $Y^1$ et $Y^2$ de corrélogrammes respectifs $\rho_1(h)$ et $\rho_2(h)$ . Les transitions entre faciès sont définies par l'intermédiaire de règles de troncature exprimées sous la forme d'un masque de seuillage. Les axes principaux du masque correspondent aux valeurs prises par $Y^1$ et $Y^2$. Des régions, souvent rectangulaires, divisent l'espace $(Y^1, Y^2)$ en sous-domaines, chaque sous-domaine étant associé à un faciès. Les bornes de ces sous-domaines sont les seuils utilisés pour tronquer $Y^1$ et $Y^2$. L'aire des sous-domaines, et par conséquent les seuils, dépendent des proportions des faciès. Dans le cas de proportions non-stationnaires, le masque de seuillage peut évoluer selon la maille considérée.

De manière générique, en notant $\varepsilon_k$ la région rectangulaire associée au faciès $k$ pour $k = 1,..., K$ , la carte en faciès est définie par :

$$V(x, y, z) = \sum_{k=1}^{K} k \mathbb{1}\left\{\left(Y^1(x, y, z), Y^2(x, y, z)\right) \in \mathcal{E}_k\right\}$$

Classiquement les régions $\varepsilon_k$ sont supposées rectangulaires. Il est possible aussi de considérer des sous-domaines associés à un faciès donnés sous la forme de l'union de plusieurs régions rectangulaires :

$$\mathcal{E}_k = \bigcup_{j=1}^{n_k} \mathcal{E}_{j,k} \;\; \text{avec}\, \mathcal{E}_{j,k} = \left\{(x, y) \in R^2, a_{j,k} \le x < b_{j,k}, c_{j,k} \le y < d_{j,k}\right\}$$

La procédure de simulation est donc la suivante :

    i. A partir des proportions de faciès et du masque de seuillage, on calcule les seuils

    ii. On génère deux réalisations Y1 et Y2 de champs Gaussiens par simulation séquentielle de Gaussienne ou par la méthode FFT-MA

    iii. On identifie le faciès à attribuer à une maille selon les valeurs de Y1 et Y2 générées pour cette maille

3. Identification d'un jeu de nombres aléatoires pour reconstruire la carte initiale

L'étape trois de la méthode selon l'invention, consiste à reconstruire la carte en faciès à partir de la procédure de génération choisie à l'étape 2. Il s'agit d'identifier des nombres aléatoires qui, si on les utilise dans la procédure de génération, produisent la carte de faciès initiale considérée.

Selon l'invention, on identifie un jeu de nombres aléatoires (NbA) permettant de reconstruire la carte initiale en inversant l'algorithme de génération de nombre aléatoire dudit simulateur géostatistique (GSIM) choisi. On considère que la carte initiale a été obtenue au moyen de ce simulateur géostatique. On connaît le résultat (F) de ce simulateur en chaque point de la carte : il s'agit de la carte initiale elle-même. Il suffit alors d'inverser ce résultat :

$$GSIM(NbA) = F \Rightarrow NbA = GSIM^{-1}(F)$$

Ce procédé d'inversion est illustré pour chacun des simulateurs géostatistiques de l'étape 2.

***Reconstruction pour la simulation séquentielle d'indicatrices***

La méthode de reconstruction proposée ici vise, à partir d'une carte en faciès $V = (V_1,...,V_n)$, à reconstruire un ensemble de nombres aléatoires $(p_1,...,p_n)$ qui, s'ils sont utilisés dans la procédure SISim, produisent la carte en faciès originale $V = (V_1,...,V_n)$. La méthode proposée est la suivante.

(1) On transforme les observations $v_\alpha$ (mesure et/ou maille déjà simulée) en un vecteur de K indicatrices, défini par :

$$i_{\alpha,k} = \begin{cases} 1 & \text{si } v_\alpha = k \\ 0 & \text{sinon} \end{cases} \qquad \textbf{pour } k\textbf{=1,...,K.}$$

(2) On construit un chemin aléatoire visitant toutes les mailles de la grille

(3) En chaque maille i du chemin :

    (a) On estime la probabilité d'occurrence de chaque faciès *k* par une technique de krigeage d'indicatrices. Les données conditionnelles sont les valeurs des indicatrices définies en (1) auxquelles on rajoute $V_{<i} = (V_1,...,V_{i-1})$, les faciès simulés précédemment

    (b) On normalise ces probabilités estimées

    (c) On construit la fonction de répartition empirique $F_{Vi|v\alpha V<i}(t)$ associée à ces probabilités

    (d) On génère un nombre aléatoire $p_i$ selon la loi uniforme sur l'intervalle $\left[ F_{Vi|v\alpha V<i}(V_i\text{-}1), F_{Vi|v\alpha V<i}(V_i) \right]$

    (e) On passe à la maille suivante sur le chemin et on répète les étapes (a) à (d)

Par construction lors de l'étape (d), le vecteur $(p_1,...,p_n)$ est asymptotiquement distribué selon une loi uniforme sur l'intervalle [0,1]. Si l'on utilise le même chemin aléatoire et les nombres aléatoires uniformes donnés par notre méthode dans la procédure SISim, on est assuré de générer la même carte en faciès que l'originale. Ainsi, l'ensemble des nombre aléatoire $p_i$ calculés à l'étape (d) constitue le jeu de nombre aléatoire recherché.

La solution obtenue avec notre méthode n'est pas unique : d'autres nombres aléatoires et d'autres chemins peuvent générer la même carte en faciès.

***Reconstruction pour la Gaussienne tronquée***

La méthode de reconstruction proposée vise, à partir d'une carte en faciès $V = (V_1,...,V_n)$ connue, à générer une réalisation Y d'un champ Gaussien stationnaire standard de corrélogramme donné $\rho(h)$ qui, lorsqu'on la tronque avec les seuils $\{a_k, k=1,...,k\}$, produit la même carte en faciès que l'originale. D'un point de vue statistique, générer une réalisation d'un tel champ Gaussien est équivalent à générer un échantillon d'un vecteur multinormal standard $(Y_1,..., Y_n)$ conditionné par $\{a_{vi\text{-}1} \leq Y_i; <a_{vi}, i = 1,...,n\}$. La distribution de ce vecteur est connue sous le nom de distribution multinormale tronquée. Il n'est pas possible de générer un échantillon de cette loi en une seule fois. Notre méthode consiste à utiliser l'approche séquentielle suivante :

(1) On construit un chemin aléatoire visitant toutes les mailles de la grille

(2) En chaque maille i, la densité de probabilité de $Y_i$ sachant les contraintes $C_{<i}$ ={$a_{Vjl-1} \leq Y_j < a_{Vj}$, j = 1,...,i} et les valeurs $Y_{<i}$ =($Y_1$,...,$Y_{i-1}$) simulées sur les mailles précédemment visitées est :

$$g_i\left(y_i \middle| C_{<i}, Y_{<i}\right) = \frac{\dfrac{1}{\hat{\sigma}_i} \rho\left(\dfrac{y_i - \hat{\mu}_i}{\hat{\sigma}_i}\right)}{\Phi\left(\dfrac{a_{V_{ii}-1} - \hat{\mu}_i}{\hat{\sigma}_i}\right) - \Phi\left(\dfrac{a_{V_{ii}} - \hat{\mu}_i}{\hat{\sigma}_i}\right)} 1\left\{a_{V_j-1} \leq Y_j < a_{V_j}, j = 1,...,i\right\}$$

$\hat{\mu}_i$ et $\hat{\sigma}_i$ sont la moyenne et l'écart-type de krigeage simple de $Y_i$ sachant $Y_{<i}$.

(3) On génère une réalisation selon cette densité de probabilité en utilisant un des algorithmes usuels, décrits par exemple dans les documents suivants :

J. Geweke, Efficient simulation from the multivariate normal and Student t-distribution subject to linear constraints, Computing Science and Statistics: Proceedings of the Twenty-Third Symposium on the Interface (1991) 571-578.

V. Mazet, D. Brie et J. Idier, Simuler une distribution normale à support positif à partir de plusieurs lois candidates, GRETSI, Louvain-la-neuve, Belgique (2005).

P. J. Fernandez, P. A. Ferrari and S. Grynberg, Perfectly random sampling of truncated multinormal distributions, Adv. in Appl. Probab, 39 (2007) 973-990.

(4) On passe à la maille suivante et on répète les étapes (2) à (3) jusqu'à ce que toutes les mailles aient été visitées.

(5) Lorsque la réalisation Y est connue, Y étant une réalisation continue de corrélogramme donné, on utilise une technique d'identification de nombre aléatoire applicable à des données continues (et non des données discrètes telles que les données de faciès), pour identifier un jeu de nombres aléatoires permettant de reconstruire par simulation stochastique la réalisation Y.

De façon avantageuse, l'identification des nombres aléatoires comporte l'utilisation de l'une des techniques suivantes, décrite dans le document FR 2869421 : optimisation, relaxation, filtrage, méthode séquentielle et une combinaison des ces techniques.
La technique d'identification par optimisation comporte une minimisation d'une fonction objectif mesurant l'écart entre le modèle stochastique numérique ($y_{ref}$) et un modèle simulé (y). On utilise le gradient de la fonction objectif par rapport aux nombres aléatoires pour reconstruire le modèle par optimisation.
La technique d'identification par filtrage s'appuie sur le filtre de Wiener. Elle convient pour les simulateurs géostatistiques qui dépendent d'un produit de convolution. Cet algorithme permet en une unique itération de reconstruire des modèles continus. Dans le domaine spectral, la transformée de Fourier s'écrit comme le produit de la transformée du bruit blanc Gaussien (i.e., le jeu de nombres aléatoires) par une fonction F, la racine carrée du spectre de puissance. La mise en place du filtre de Wiener implique qu'on remplace l'inverse de F, $F^{-1}$, par $\overline{F}/(|F|^2 + \varepsilon)$ où $\varepsilon$ est une constante suffisamment petite. On estime alors le bruit blanc Gaussien z à partir de :

$$z = TF^{-1}\left(\frac{\overline{F}}{\left(|F|^2 + \varepsilon\right)} Y_{ref}\right).$$

où $TF^{-1}$ signifie : transformée de Fourier inverse

Par construction, la réalisation obtenue par cette méthode respecte les contraintes de seuils imposées, et produit donc après troncature la même carte en faciès que l'originale. La méthode proposée produit une solution qui n'est pas unique et qui peut différer de la réalisation en faciès de référence.

***Reconstruction pour le pluri-Gaussien***

La méthode de reconstruction est similaire à celle proposée dans le cas des Gaussiennes tronquées : on génère deux réalisations $Y^1$ et $Y^2$ de champs Gaussiens stationnaires standards de corrélogrammes connus $\rho_1(h)$ et $\rho_2(h)$ qui, lorsqu'on les combine au masque de seuillage donné, produisent une carte en faciès semblable à l'originale $(V_1,..., V_n)$. La méthode proposée est une fois de plus basée sur une approche séquentielle :

(1) On construit un chemin aléatoire visitant toutes les mailles de la grille

(2) En chaque maille i, la densité de probabilité de $(Y_i^1, Y_i^2)$ sachant les contraintes

$$C_{<i} = \left\{(Y_j^1, Y_j^2) \in \mathcal{E}_{V_j}, j = 1,...,i\right\}$$ les valeurs $(Y_{<i}^1, Y_{<i}^2)$ simulées sur les mailles précédemment visitées est le mélange suivant :

$$g(y_i^1, y_i^2 | C_{<i}, Y_{<i}^1, Y_{<i}^2) = \sum_{j=1}^{n_{V_i}} \varepsilon_j g_j^1(y_i^1) g_j^2(y_i^2)$$

avec

$$g_j^1(y_i^1) = \frac{\frac{1}{\hat{\sigma}_i^{(1)}} \rho\left(\frac{y_i^1 - \hat{\mu}_i^{(1)}}{\hat{\sigma}_i^{(1)}}\right)}{\Phi\left(\frac{b_{j,V_i} - \hat{\mu}_i^{(1)}}{\hat{\sigma}_i^{(1)}}\right) - \Phi\left(\frac{a_{j,V_i} - \hat{\mu}_i^{(1)}}{\hat{\sigma}_i^{(1)}}\right)}$$

$$g_j^2(y_i^2) = \frac{\frac{1}{\hat{\sigma}_i^{(2)}} \rho\left(\frac{y_i^2 - \hat{\mu}_i^{(2)}}{\hat{\sigma}_i^{(2)}}\right)}{\Phi\left(\frac{d_{j,V_i} - \hat{\mu}_i^{(2)}}{\hat{\sigma}_i^{(2)}}\right) - \Phi\left(\frac{c_{j,V_i} - \hat{\mu}_i^{(2)}}{\hat{\sigma}_i^{(2)}}\right)}$$

où $\varepsilon_j = |\varepsilon_{j,V_i}|/|\varepsilon_{V_i}|$ et $\hat{\mu}_i^{(1)}$ et $\hat{\sigma}_i^{(1)}$ (resp. $\hat{\mu}_i^{(2)}$ et $\hat{\sigma}_i^{(2)}$) sont la moyenne et l'écart-type de krigeage simple de

$Y_i^1$ (resp. $Y_i^2$) sachant $Y_{<i}^1$ (resp. $Y_{<i}^2$).).

(3) On génère une réalisation selon cette densité de probabilité

(4) On passe à la maille suivante et on répète les étapes (2) à (3) jusqu'à ce que toutes les mailles aient été visitées.

(5) Lorsque les réalisations Y1 et Y2 sont connues, Y1 et Y2 étant des réalisations continues de corrélogrammes donnés, on utilise une technique d'identification de nombre aléatoire applicable à des données continues (et non des données discrètes telles que les données de faciès), pour identifier deux jeux de nombres aléatoires permettant de reconstruire par simulation stochastique d'une part la réalisation Y1 et d'autre part la réalisation Y2.

Dans le cas des Gaussiennes tronquées et des pluri-Gaussiennes, la méthode de simulation et donc de reconstruction associée implique des champs Gaussiens dont le corrélogramme est supposé connu. Si ce n'est pas le cas, il est nécessaire de les estimer à partir de la carte en faciès. La relation mathématique entre le variogramme de la carte en faciès et le variogramme du ou des champs Gaussiens qui l'ont généré ne peut pas être inversée, comme noté dans l'ouvrage suivant :

- J.-P. Chilès and P. Delfiner, Geostatistics. Modeling Spatial Uncertainty, Wiley Series in Probability and Statistics (1999).

L'approche que nous proposons consiste à proposer une série de variogrammes et de sélectionner celui qui produit le variogramme expérimental le plus proche de celui observé sur la carte en faciès.
L'identification du jeu de nombre aléatoire a pour fonction de pouvoir modifier la carte initiale pour qu'elle respecte les nouvelles mesures effectuées.

### 4. Mise à jour de la carte pour prendre en compte les mesures

Maintenant que l'on possède un simulateur géostatistique et un jeu de nombre aléatoire qui, appliqué au simulateur, permet de reconstruire la carte initiale, il est possible de modifier la carte avec des méthodes usuelles, telles que :

- la méthode de déformation graduelle, technique de paramétrage géostatistique répondant aux besoins de l'ingénieur et présentée dans l'article suivant:

   Hu, L.-Y., 2000, Gradual deformation and iterative calibration of Gaussian-related stochastic models, Math. Geol., 32(1), 87-108.).

Elle donne en effet la possibilité de reprendre l'étude d'un réservoir et de le modifier partiellement dans les zones où de nouvelles données sont disponibles, comme c'est décrit dans le document suivant :

   Le Ravalec-Dupin, M., Noetinger, B., Hu, L.-Y., and Blanc, G., 2001, Conditioning to dynamic data: an improved zonation approach, Petroleum Geosciences, 7, S9-S16.

Pour déformer localement une zone du réservoir, on applique la méthode de déformation graduelle aux nombres aléatoires des mailles incluses dans cette zone. L'ensemble des nombres, ceux de la zone cible et ceux du domaine encaissant, sont ensuite fournis au simulateur stochastique pour obtenir une nouvelle réalisation représentant le réservoir. Cette nouvelle réalisation diffère de la réalisation de départ dans la zone cible et dans une zone de transition qui entoure la zone cible. L'avantage de revenir aux nombres aléatoires pour faire la déformation graduelle est que l'on préserve la continuité de la réalisation.

### 5. Modification du schéma d'exploitation du gisement et exploitation du gisement

Une fois la carte en faciès mise à jour à partir des mesures nouvellement acquises, le schéma d'exploitation du gisement est reconstruit.
La carte des faciès mise à jour étant cohérente avec l'ensemble des données disponibles, on l'utilise pour prédire les déplacements de fluide dans le réservoir en fonction de différents scenarii de production. On peut alors, pour cette carte de faciès, chercher à optimiser la production future en huile en ajustant par exemple la position des puits, le nombre de puits...

On exploite finalement le gisement en mettant en oeuvre le schéma d'exploitation ainsi adapté. On peut par exemple réaliser des forages, ou modifier des paramètres techniques de production ou d'injection,...

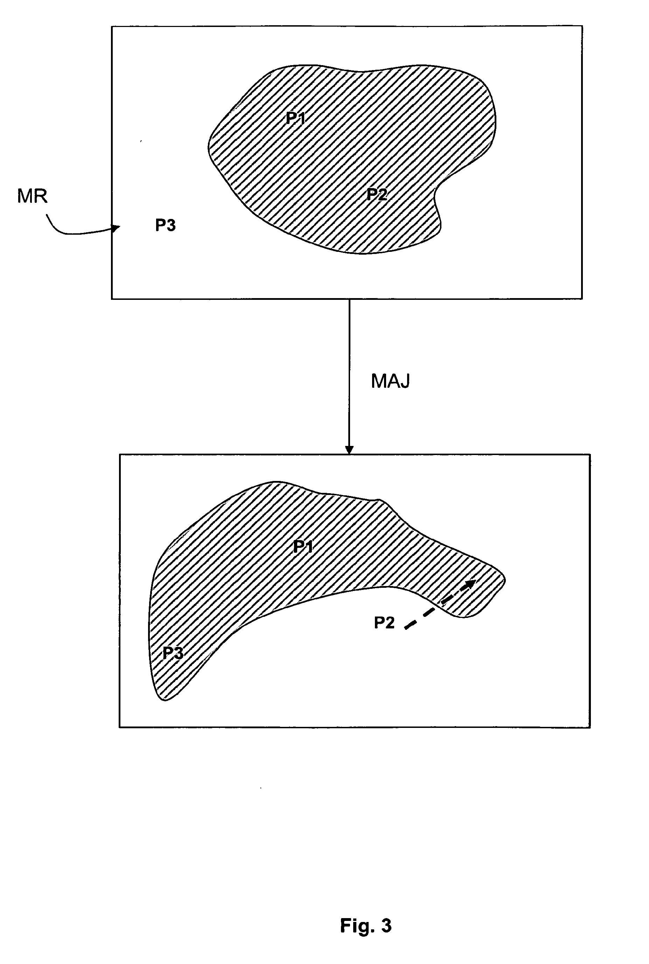

La figure 3 illustre l'adaptation nécessaire du schéma d'exploitation suite à la modification de la carte de faciès prenant en compte de nouvelles mesures. En effet, dans le schéma d'exploitation initial du gisement (en gris), le puits P2 était censé atteindre le gisement, et à l'inverse, le puits P3 était censé être foré en dehors du gisement. De ce fait, et par exemple, le puits P3 n'était pas en production, alors que le puits P2 devait être foré plus en profondeur pour atteindre le gisement. Selon la nouvelle carte, on va modifier la trajectoire de P2 pour qu'il atteigne effectivement le gisement. On peut également continuer à forer au niveau de P3, pour atteindre le gisement, et mettre P3 en production.

**Revendications**

1. Méthode d'exploitation d'un gisement pétrolier selon un schéma d'exploitation donné, à partir d'une carte de faciès représentative du gisement, méthode dans laquelle on réalise des mesures permettant de mieux caractériser ledit gisement, **caractérisé en ce que** :

   - on choisit un simulateur géostatistique comprenant un algorithme de génération de nombre aléatoire ;
   - on identifie un jeu de nombres aléatoires qui, donné audit simulateur géostatistique, fournit une représentation en faciès identique à ladite carte, en inversant ledit algorithme de génération de nombre aléatoire;
   - on modifie ladite carte pour prendre en compte lesdites mesures, en réalisant une simulation géostatistique contrainte par lesdites mesures, au moyen dudit simulateur géostatistique et dudit jeu de nombres aléatoires;
   - on adapte ledit schéma d'exploitation du gisement en tenant compte de ladite carte modifiée ; et
   - on exploite ledit gisement en mettant en oeuvre ledit schéma d'exploitation modifié.

2. Méthode selon la revendication 1, dans laquelle lesdites mesures sont choisies parmi les données suivantes: des données diagraphiques, des données issues d'analyse de carottes, des données de production.

3. Méthode selon l'une des revendications précédentes, dans laquelle ledit simulateur géostatistique est choisi parmi les simulateurs suivants : simulateur utilisant la méthode de simulation séquentielle d'indicatrices, simulateur utilisant la méthode des Gaussiennes tronquées, simulateur utilisant la méthode des pluri-Gaussiennes.

4. Méthode selon la revendication 3, dans laquelle ledit simulateur géostatistique est un simulateur utilisant la méthode de simulation séquentielle d'indicatrices, ladite carte est une grille dont chaque maille possède une valeur V de faciès, $V = (V_1,...,V_n)$, on identifie ledit jeu de nombres aléatoires, $p_1,...,p_n$, en réalisant les étapes suivantes:

   i. on transforme lesdites mesures, $v_\alpha$, en un vecteur d'indicatrices;
   ii. on construit un chemin aléatoire visitant toutes les mailles de ladite grille,
   iii. en chaque maille i dudit chemin :

   (a) on estime une probabilité d'occurrence de chaque faciès par une technique de krigeage d'indicatrices utilisant comme données conditionnelles ledit vecteur d'indicatrices auquel on ajoute des faciès simulés précédemment, $V_{<i} = (V_1,...,V_{i-1})$;
   (b) on normalise ladite probabilité d'occurrence;
   (c) on construit une fonction de répartition empirique $F_{Vi|v\alpha V<i}$ associée à la probabilité d'occurrence ;
   (d) on génère un nombre aléatoire $p_i$ selon une loi uniforme sur l'intervalle

$$\left[ F_{V_i|v_\alpha V_{<i}}(V_i - 1), F_{V_i|v_\alpha V_{<i}}(V_i) \right] ;$$

5. Méthode selon la revendication 3, dans laquelle ledit simulateur géostatistique est un simulateur utilisant la méthode des Gaussiennes tronquées, ladite carte est une grille dont chaque maille possède une valeur $V$ de faciès, $V = (V_1,...,V_n)$, on identifie ledit jeu de nombres aléatoires, en réalisant les étapes suivantes:

   - on génère une réalisation Y d'un champ Gaussien stationnaire de corrélogramme donné $\rho(h)$ qui, lorsqu'on tronque ladite réalisation Y avec des seuils donnés, produit une représentation en faciès identique à ladite carte ; et

- on identifie ledit jeu de nombres aléatoires, en déterminant un jeu de nombres aléatoires permettant de reconstruire par simulation stochastique la réalisation Y au moyen d'une technique d'identification de nombre aléatoire applicable à des données continues.

**6.** Méthode selon la revendication 5, dans laquelle on génère ladite réalisation Y en appliquant l'approche séquentielle suivante :

    i. on construit un chemin aléatoire visitant toutes les mailles de la grille

    ii. en chaque maille $i$,

        (a) on calcule une densité de probabilité $g_i(y_i|C_{<i}, Y_{<i})$ de $Y_i$ sachant des contraintes $C_{<i} = \{\alpha_{Vji-1} \leq Y_j < a_{Vj}, j = 1,...,i\}$ et des valeurs $Y_{<i} = (Y_1,...,Y_{i-1})$ simulées sur des mailles précédemment visitées par la formule suivante:

$$g_i\left(y_i\big|C_{<i}, Y_{<i}\right) = \frac{\cdot\dfrac{1}{\hat{\sigma}_i}\rho\left(\dfrac{y_i - \hat{\mu}_i}{\hat{\sigma}_i}\right)}{\Phi\left(\dfrac{a_{V_{ii}-1} - \hat{\mu}_i}{\hat{\sigma}_i}\right) - \Phi\left(\dfrac{a_{V_{ii}} - \hat{\mu}_i}{\hat{\sigma}_i}\right)} 1\left\{a_{V_j-1} \leq Y_j < a_{V_j}, j = 1,...,i\right\}$$

    avec : $\hat{\mu}_i$ et $\hat{\sigma}_i$ moyenne et écart-type de krigeage simple de $Y_i$ sachant $Y_{<i}$.

    (b) on génère une réalisation selon ladite densité de probabilité.

**7.** Méthode selon la revendication 3, dans laquelle ledit simulateur géostatistique est un simulateur utilisant la méthode des pluri-Gaussiennes, ladite carte est une grille dont chaque maille possède une valeur $V$ de faciès, $V = (V_1,...,V_n)$, on identifie ledit jeu de nombres aléatoires, en réalisant les étapes suivantes:

    - on génère deux réalisations $Y^1$ et $Y^2$ de champs Gaussiens stationnaires standards de corrélogrammes connus $\rho_1(h)$ et $\rho_2(h)$ qui, lorsqu'on combine lesdites réalisations $Y^1$ et $Y^2$ à un masque de seuillage donné, produisent une représentation en faciès identique à ladite carte ; et

    - on identifie ledit jeu de nombres aléatoires, en déterminant deux jeux de nombres aléatoires permettant de reconstruire par simulation stochastique lesdites réalisations $Y^1$ et $Y^2$ au moyen d'une technique d'identification de nombre aléatoire applicable à des données continues, ledit jeu de nombres aléatoires étant constitué desdits deux jeux de nombre aléatoire.

**8.** Méthode selon la revendication 7, dans laquelle on génère lesdites réalisations $Y^1$ et $Y^2$ en appliquant l'approche séquentielle suivante :

    i. on construit un chemin aléatoire visitant toutes les mailles de la grille;

    ii. en chaque maille $i$

    (a) on calcule une densité de probabilité $g(y_i^1, y_i^2 | C_{<i}, Y_{<i}^1, Y_{<i}^2)$ de $(Y_i^1, Y_i^2)$ sachant des contraintes

$$C_{<i} = \left\{(Y_j^1, Y_j^2) \in \mathcal{E}_{V_j}, j = 1,...,i\right\}$$ et des valeurs $\left(Y_{<i}^1, Y_{<i}^2\right)$ simulées sur des mailles précédemment visitées par la formule suivante:

$$g(y_i^1, y_i^2 | C_{<i}, Y_{<i}^1, Y_{<i}^2) = \sum_{j=1}^{n_{V_i}} \varepsilon_j g_j^1(y_i^1) g_j^2(y_i^2)$$

avec :

$$g_j^1\left(y_i^1\right)=\dfrac{\dfrac{1}{\hat{\sigma}_i^{(1)}}\rho\left(\dfrac{y_i^1-\hat{\mu}_i^{(1)}}{\hat{\sigma}_i^{(1)}}\right)}{\Phi\left(\dfrac{b_{j,v_i}-\hat{\mu}_i^{(1)}}{\hat{\sigma}_i^{(1)}}\right)-\Phi\left(\dfrac{a_{j,v_i}-\hat{\mu}_i^{(1)}}{\hat{\sigma}_i^{(1)}}\right)}$$

$$g_j^2\left(y_i^2\right)=\dfrac{\dfrac{1}{\hat{\sigma}_i^{(2)}}\rho\left(\dfrac{y_i^2-\hat{\mu}_i^{(2)}}{\hat{\sigma}_i^{(2)}}\right)}{\Phi\left(\dfrac{d_{j,v_i}-\hat{\mu}_i^{(2)}}{\hat{\sigma}_i^{(2)}}\right)-\Phi\left(\dfrac{c_{j,v_i}-\hat{\mu}_i^{(2)}}{\hat{\sigma}_i^{(2)}}\right)}$$

où $\varepsilon_j=|\varepsilon_{j,V}|/|\varepsilon_{Vi}|$ et $\hat{\mu}_i^{(x)}$ et $\hat{\sigma}_i^{(x)}$ sont la moyenne et l'écart-type de krigeage simple de $Y_i^x$ sachant $Y_{<i}^x$, et x=1 ou x=2;

(b) on génère une réalisation selon ladite densité de probabilité.

9. Méthode selon l'une des revendications précédentes, dans laquelle on modifie ladite carte en appliquant une méthode de déformation graduelle.

**Fig. 1**

**Fig. 2**

MR

P3

P1

P2

MAJ

P1

P2

P3

**Fig. 3**

Europäisches
Patentamt

European
Patent Office

Office européen
des brevets

**RAPPORT DE RECHERCHE EUROPEENNE**

Numéro de la demande

EP 10 29 0610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | LE RAVALEC-DUPIN M ET AL: "Reconstruction of Existing Reservoir Model for Its Calibration to Dynamic Data", EARTH SCIENCE FRONTIERS,, vol. 15, no. 1, 1 janvier 2008 (2008-01-01), pages 176-186, XP022634281, ISSN: 1872-5791 [extrait le 2008-01-01] * le document en entier * ----- | 1-9 | INV. G06F17/50 |
| Y | EP 2 034 130 A2 (INST FRANCAIS DU PETROLE [FR]) 11 mars 2009 (2009-03-11) * le document en entier, en particulier alinéas [0017] et [0023] * ----- | 1-9 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| Munich | 31 mars 2011 | Lerbinger, Klaus |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 29 0610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2011

| Document brevet cité au rapport de recherche | | Date de publication | Membre(s) de la famille de brevet(s) | | Date de publication |
|---|---|---|---|---|---|
| EP 2034130 | A2 | 11-03-2009 | FR | 2920816 A1 | 13-03-2009 |
| | | | US | 2009070086 A1 | 12-03-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2869421

**Littérature non-brevet citée dans la description**

- **GOOVAERTS, P.** Geostatistics for Natural Resources Evaluation. Oxford University Press, 1997
- **GALLI, A. ; BEUCHER, H. ; LE LOC'H, G. ; DOLIGEZ, B.** The pros and the cons of the truncated gaussian method. *Geostatistical Simulations,* 1994, 217-233
- Truncated plurigaussian method: theoretical and practical point of view. **LE LOC'H, G. ; GALLI, A.** Geostatistics Wollongong'96. Kluwe, 1996, vol. 1, 211-222
- **LE RAVALEC M. ; NOETINGER B. ; HU L.Y.** The FFT moving average (FFT-MA) generator: an efficient numerical method for generating and conditioning Gaussian simulations. *Math. Geol.,* 2000, vol. 32 (6
- Conditioning a Gaussian model with inequalities. **FREULON, X. ; DE FOUQUET, C.** Geostatistics Troia'92. Kluwer Academic Publishers, 1993, 201-212
- **GEWEKE.** Efficient simulation from the multivariate normal and Student t-distribution subject to linear constraints. *Computing Science and Statistics: Proceedings of the Twenty-Third Symposium on the Interface,* 1991, 571-578
- **MAZET ; D. BRIE ; J. IDIER.** Simuler une distribution normale à support positif à partir de plusieurs lois candidates. *GRETSI,* 2005
- **J. FERNANDEZ ; P. A. FERRARI ; S. GRYNBERG.** Perfectly random sampling of truncated multinormal distributions. *Adv. in Appl. Probab,* 2007, vol. 39, 973-990
- Geostatistics. Modeling Spatial Uncertainty. **J.-P. CHILÈS ; P. DELFINER.** Probability and Statistics. Wiley, 1999
- **HU, L.-Y.** Gradual deformation and iterative calibration of Gaussian-related stochastic models. *Math. Geol.,* 2000, vol. 32 (1), 87-108
- **LE RAVALEC-DUPIN, M. ; NOETINGER, B. ; HU, L.-Y. ; BLANC, G.** Conditioning to dynamic data: an improved zonation approach. Petroleum Geosciences, 2001, vol. 7, S9-S16